# EUROPÄISCHE PATENTSCHRIFT

(11) **EP 4 267 374 B1**
(45) Veröffentlichungstag und Bekanntmachung des Hinweises auf die Patenterteilung: **30.09.2026**
(21) Anmeldenummer: 22700478.5
(22) Anmeldetag: 12.01.2022
(51) Int. Cl.: B29C 64/112, B29C 64/232, B29C 64/236, B33Y 10/00, B33Y 30/00, B22F 10/22, B22F 10/38

(54) **VERFAHREN UND VORRICHTUNG ZUR SCHICHTWEISEN FERTIGUNG EINES BAUTEILS**
METHOD AND DEVICE FOR LAYERED MANUFACTURE OF A COMPONENT
PROCÉDÉ ET DISPOSITIF DE FABRICATION PAR COUCHES D'UN ÉLÉMENT

(30) Priorität: 28.01.2021 DE 102021101984
(43) Veröffentlichungstag der Anmeldung: 01.11.2023
(73) Patentinhaber: Grob-Werke GmbH & Co. KG, 87719 Mindelheim (DE)
(72) Erfinder: HIMMEL, Benjamin, 81249 München (DE); GLASSCHRÖDER, Johannes, 86356 Neusäß (DE); OTTER, Martin, 87700 Memmingen (DE); LEUSCH, Oliver, 86159 Augsburg (DE); MIKLEC, Christian, 86825 Bad Wörishofen (DE)
(74) Vertreter: Kramer Barske Schmidtchen Patentanwälte PartG mbB
(86) Internationale Anmeldenummer: PCT/EP2022/050482
(87) Internationale Veröffentlichungsnummer: WO 2022/161764

(56) Entgegenhaltungen:
- US-A1- 2018 243 984

## Beschreibung

Die vorliegende Offenbarung betrifft ein Verfahren und eine Vorrichtung zur schichtweisen Fertigung eines Bauteils, insbesondere durch tropfenweise Aufbringen eines flüssigen Materials mittels eines Druckkopfs.

Additive Fertigungsverfahren zeichnen sich durch einen hohen Grad an Gestaltungsfreiheit und durch die werkzeuglose Fertigung aus. Daher eignen sie sich besonders für Einzelteile und Bauteile mit einem hohen Grad an Komplexität, die mit konventionellen Fertigungsverfahren nicht oder nur unter großem Aufwand hergestellt werden können. Bei diesen additiven Fertigungsverfahren werden die Werkstücke basierend auf digitalen Modellen schichtweise oder elementweise aufgebaut.

Es gibt verschiedene additive Fertigungsverfahren, mittels derer ein Bauteil schichtweise gefertigt werden kann. Typische Verfahren für den Aufbau metallischer Bauteile sind etwa das als "Laser Powder Bed Fusion" (LPBF) bekannte Verfahren, das "Direct Energy Deposition" (DED) Verfahren und das sogenannte "Material Jetting" (MJT) Verfahren, bei dem schmelzflüssiges Material von einem Druckkopf durch ein oder mehrere individuell angesteuerte Düsen direkt auf eine Bauplattform gedruckt wird.

Eine Vorrichtung, welche individuelle Tropfen basierend auf einem Ansteuersignal abgibt, wird üblicherweise als "Drop-On-Demand" (DOD) Druckkopf bezeichnet. Dabei wird für jeden zu erzeugenden Tropfen ein elektrisches Signal an den Aktuator des Druckkopfs gesandt. In Abhängigkeit von der Anzahl von Düsen in einem Druckkopf können dabei zwei unterschiedliche Strategien verwendet werden, die als rasterbasiertes Drucken oder vektorbasiertes Drucken bezeichnet werden. Beim rasterbasierten Drucken mit einem Druckkopf mit mehr als einer Düse wird der Druckkopf allgemein mäanderförmig über das Bauteil bewegt. Beim vektorbasierten Drucken mit nur einer Düse ist die Bewegung des Druckkopfs frei wählbar. Der Abstand der Tropfen entlang der Vorschubrichtung ergibt sich in beiden Fällen aus der Geschwindigkeit des Druckkopfs und der Frequenz des an den Aktuator des Druckkopfs gesandten Triggersignals. Ferner ergibt sich beim rasterbasierten Drucken der Linienabstand quer zur Vorschubrichtung des Druckkopfs aus der Anordnung der Düsen im Druckkopf und der Bewegungsrichtung. Im Falle des vektorbasierten Druckens ergibt sich dieser Abstand alleine aus der gewählten Bahn.

Bei einem vektorbasierten Drucken kann das Signal für die Tropfenerzeugung auf zwei Arten erzeugt werden. Es kann beispielsweise eine konstante Druckfrequenz verwendet werden, und dann wird im Allgemeinen auch die Bahngeschwindigkeit während der Tropfenabgabe konstant gewählt, da ansonsten keine gleichmäßige Spur erzeugt werden kann. Ferner ist es möglich, die abgefahrene Bahn während der Erzeugung derselben zu messen oder diese zu simulieren und jedes Mal dann, wenn der gewünschte Tropfenabstand innerhalb der Bahn erreicht wird, ein neues Triggersignal zu erzeugen. Auf diese Weise können veränderliche Bahngeschwindigkeiten verwendet werden, jedoch ist eine entsprechend genaue und hochfrequente Messtechnik erforderlich.

Die WO 2020/108038 A1 beschreibt ein Verfahren zum Überwachen einer Schichthöhe bei einem additiven Herstellungsprozess. Beispielsweise werden optische oder andere Mittel dazu verwendet, Schichten Schicht für Schicht zu messen. Um eventuell auftretende Fehler zu korrigieren, können Parameter wie eine Tropfengröße, ein Tropfenabstand und andere Bedingungen modifiziert werden.

US 2018/243984 A1 offenbart ein Verfahren zum Herstellen eines dreidimensionalen Objekts und ein Verfahren zum Bereitstellen von Daten für einen Düsenbewegungspfad, der dabei zu verwenden ist, sowie eine entsprechende Vorrichtung und ein entsprechendes Programm.

Aufgabe der Erfindung ist es, eine Möglichkeit zu schaffen, eine schichtweise Fertigung eines Bauteils zu ermöglichen, wobei jede Schicht eine möglichst ebene Oberfläche, eine konstante Schichtdicke und/oder ein möglichst geringes Porenvolumen aufweist.

Diese Aufgabe wird gelöst mit dem Verfahren nach Anspruch 1 und der Vorrichtung nach Anspruch 14. Weiterbildungen der Erfindung sind in den abhängigen Ansprüchen angegeben.

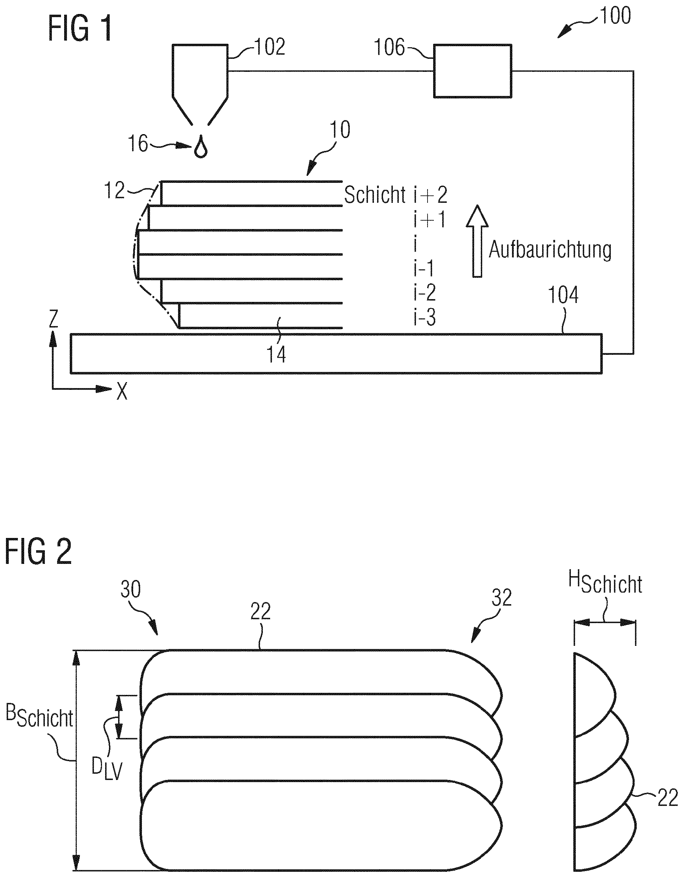

Betrachtet man die Geometrie einer abgelegten Tropfenspur bei der additiven Fertigung unter Verwendung des MJT-Verfahrens, so ist deren Form stark von unterschiedlichen Prozessparametern wie einer Tropfengröße, einer Geschwindigkeit der Tropfen beim Aufprall, einer Legierungszusammensetzung, einer Temperatur der Tropfen und des Untergrunds, einer Beschaffenheit (Material, Struktur etc.) des Untergrunds und einem Tropfenabstand entlang der Vorschubrichtung abhängig. Dies führt dazu, dass entlang der Druckrichtung im Allgemeinen weder die Höhe noch die Breite einer Spur konstant sind. Wie in Fig. 2 beispielsweise gezeigt, ist insbesondere am Ende und am Anfang einer Spur eine Abrundung derselben vorhanden, die sogar unterschiedlich sein kann. Darüber hinaus weist in dem Fall, in dem mehrere, ggf. einander überlappende Spuren entlang paralleler Bahnen abgelegt werden, eine auf diese Weise erzeugte Schicht eine Geometrie auf, die neben den obengenannten Einflüssen insbesondere auch von dem Abstand zwischen den Bahnen abhängt.

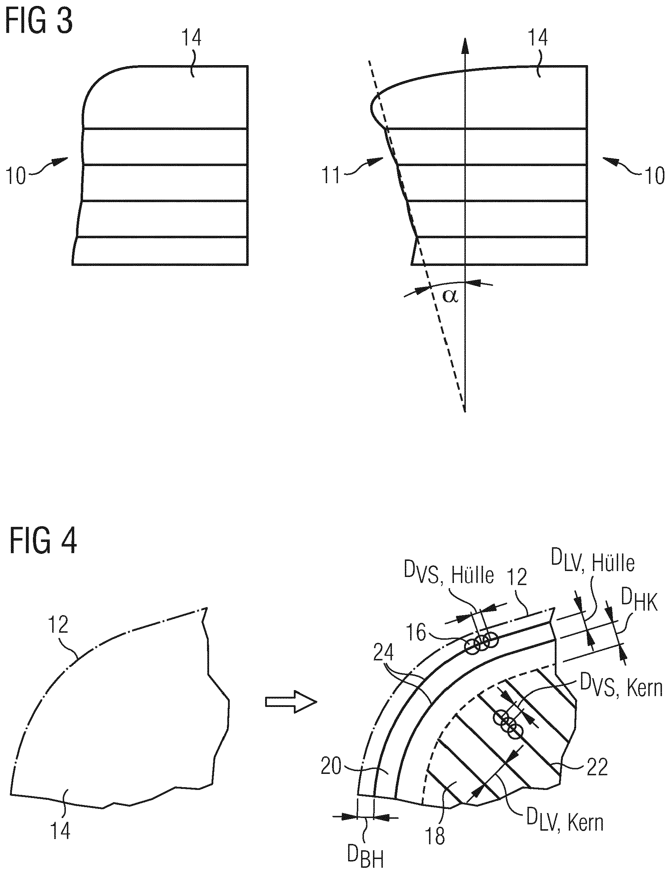

Beim Aufbau mehrerer Schichten ist insbesondere der Bauteilrand von Interesse. So erlaubt zwar die Oberflächenspannung des verwendeten flüssigen Materials, beispielsweise eines Metalls, das Fertigen von Überhängen, allerdings wirkt sich ein solcher Überhang negativ auf die Ebenheit der Schicht aus, da sich das Bauteil zum Überhang hin abrundet bzw. absackt. Dies ist auf beispielhafte Weise in Fig. 3 veranschaulicht. Auch wenn kein Überhang vorhanden ist, kann ein ähnliches Problem auftreten, wie in Fig. 3 links gezeigt ist.

Kerngedanke der vorliegenden Erfindung ist, die oben beschriebene Aufgabe dadurch zu lösen, dass beim Aufbau dreidimensionaler Bauteile mit dem MJT-Verfahren eine Hülle-Kern-Strategie verwendet wird, um insbesondere das Abrunden der Kanten zu verringern und möglichst ebene Schichten zu erzeugen. Dabei kann beim Drucken der Hülle eine Kompensation überhängender Bauteilbereiche durchgeführt werden. Ferner können insbesondere beim Drucken der Hülle Freifahrtschleifen verwendet werden, um bei Bahnen mit großer Krümmung oder scharfen Ecken eine konstant hohe Bahngeschwindigkeit während der Tropfenabgabe sicherzustellen.

Im Gegensatz zu Verfahren, bei denen eine Messung der Schicht erforderlich ist, um ggf. Korrekturen durchzuführen, ist bei der vorliegenden Erfindung die konkrete Umsetzung bereits bei der Bahnplanung bekannt, und die erfindungsgemäßen Strategien erfordern keine zusätzliche Einrichtung zur Messung und/oder Nachbearbeitung der Schichten. Solche zusätzlichen Einrichtungen weisen insbesondere im Hinblick auf die Fertigungszeit erhebliche Nachteile auf, da sie einen zusätzlichen Prozessschritt darstellen. Darüber hinaus erhöhen sie den Komplexitätsgrad der Maschine, was sich nachteilig auf die Wirtschaftlichkeit auswirkt. Ein weiterer Vorteil der vorliegenden Erfindung besteht darin, dass die Kompensation von überhängenden Bereichen des Bauteils ermöglicht, dass auch komplexere Bauteile mit solchen überhängenden Bereichen ohne die Verwendung von Stützstrukturen hergestellt werden können.

Ausführungsformen und Weiterbildungen der Erfindung werden im Folgenden anhand der Figuren beschrieben. Es zeigen:
FIG. 1 eine schematische Seitenansicht, die eine schichtweise Fertigung eines Bauteils unter Verwendung eines Druckkopfs zeigt;
FIG. 2 eine schematische Aufsicht und eine schematische Seitenansicht mehrerer benachbarter Bahnen einer Schicht eines von dem Druckkopf aufgebrachten Materials;
FIG. 3 zwei schematische Seitenansichten eines Randbereichs eines Bauteils ohne und mit einem Überhang;
FIG. 4 eine schematische Aufsicht zur Veranschaulichung eines Aufbringens einer Materialschicht gemäß dem hierin offenbarten Verfahren;
FIG. 5 eine weitere schematische Aufsicht zur Veranschaulichung eines Aufbringens einer Materialschicht gemäß dem hierin offenbarten Verfahren bei vorhandenem Überhang; und
FIG. 6 eine schematische Ansicht zur Erläuterung einer Möglichkeit eines Aufbringens von Material an einer Ecke eines Bauteils.

Bei dem MJT-Verfahren werden bekannter Weise dreidimensionale Bauteile schichtweise aufgebaut. So zeigt Fig. 1 einen Teil eines Bauteils 10, das aus mehreren Schichten 14 besteht. Die Herstellung des Bauteils 10 erfolgt durch eine Vorrichtung 100 zur additiven Fertigung des Bauteils 10. Wie in Fig. 1 gezeigt, weist die Vorrichtung 100 dazu einen Druckkopf 102, der zum Aufbringen eines flüssigen Materials 16 ausgebildet ist, eine Verfahrvorrichtung 104, die zum Verfahren des Druckkopfs 102 und des zu fertigenden Bauteils 10 relativ zueinander ausgebildet ist, und eine Steuervorrichtung 106, die ausgebildet ist zum Steuern des Druckkopfs 102 und der Verfahrvorrichtung 104, auf. Bei dem in Fig. 1 gezeigten Beispiel ist die Aufbaurichtung die z-Richtung, und der Druckkopf 102 und die Verfahrvorrichtung 104 werden in einer Schicht in der x-y-Ebene und beim Übergang von einer Schicht zur nächsten in der z-Richtung relativ zueinander verfahren. Dabei versteht sich, dass die Steuervorrichtung 106 dazu ausgebildet sein kann, entweder den Druckkopf 102 bezüglich der Verfahrvorrichtung 104 und des darauf angeordneten Bauteils 10 zu verfahren, oder umgekehrt die Verfahrvorrichtung 104 mit dem darauf angeordneten Bauteil 10 bezüglich des Druckkopfs 102 zu verfahren. Eine entsprechende Fertigungstechnik ist dem Fachmann bekannt, so dass weitere Einzelheiten hierin nicht näher erläutert werden.

Die Daten zur Steuerung der Vorrichtung 100 werden vorab aus einem digitalen Modell des zu fertigenden Bauteils generiert. Dies erfolgt mithilfe geeigneter Algorithmen. Dabei wird in einem ersten Schritt das Bauteil senkrecht zur Aufbaurichtung in Schichten (z.B. i-3, i-2, ..., i+2) zerlegt. Ein Außenumfang des Bauteils 10 wird durch eine Kontur 12 festgelegt.

In einem zweiten Schritt werden die Daten zur Maschinensteuerung berechnet, die benötigt werden, um jede Einzelschicht zu fertigen. Erfindungsgemäß wird dabei eine Hülle-Kern-Strategie verwendet, um eine einzelne Schicht durch die Ablage einzelner Tropfen entlang berechneter Bahnen aufzubauen.

Fig. 4 zeigt ein Beispiel für die erfindungsgemäße Bahnplanung einer Schicht bei einer Verwendung der Hülle-Kern-Strategie. Wie hierin verwendet, bedeutet der Ausdruck "Hülle" einen äußeren Bereich 20 der Schicht 14, der entlang der Kontur 12 des Bauteils 10 verläuft bzw. diese definiert. Darüber hinaus bedeutet der Ausdruck "Kern" einen zentralen Kernbereich 18 der Schicht, der von dem äußeren Bereich 20 zumindest teilweise umgeben ist. Bei einigen Ausführungsformen umschließt die Hülle den Kern vollständig, das heißt, erstreckt sich entlang der gesamten Kontur 12. Es versteht sich jedoch, dass bei anderen Ausführungsformen die Hülle lediglich entlang Abschnitten der Kontur 12 vorgesehen sein kann, beispielsweise am Anfang und am Ende der jeweiligen Kernbahnen, und insbesondere nicht zusammenhängend ausgebildet sein muss. Daraus folgt, dass bei einigen Ausführungsformen der Kern zumindest in Abschnitten die Kontur 12 festlegen kann, beispielsweise in Bereichen, in denen geringere Anforderungen an die Ebenheit der Schicht gestellt werden. Ferner muss die Hülle keine konstante Breite aufweisen, was im Folgenden noch näher erläutert wird.

Allgemein wird bei dem erfindungsgemäßen Verfahren zunächst die Kontur 12 des zu fertigenden Bauteils 10 in einer Schicht 14 desselben festgelegt, anhand der bereits erwähnten Daten des digitalen Modells des zu fertigenden Bauteils. Basierend darauf wird dann der äußere Bereich 20 der Schicht 14, der entlang der Kontur 12 verläuft (die Hülle) und der zentrale Kernbereich 18 der Schicht 14, der von dem äußeren Bereich 20 umgeben ist (der Kern) festgelegt. Dann werden die zum Ausbilden der Hülle und des Kerns benötigten Bahnen berechnet. Danach erfolgt das tropfenweise Aufbringen des flüssigen Materials 16 in dem Kernbereich 18 und in dem äußeren Bereich 20 entlang der berechneten Bahnen. Bei einem Beispiel erfolgt das tropfenweise Aufbringen des flüssigen Materials 16 in dem Kernbereich 18 entlang mehrerer paralleler, beispielsweise geradliniger Kernbahnen 22, die einen ersten Abstand D_{LV,Kern} zueinander aufweisen. Bevorzugt werden die Bahnen in Abhängigkeit von der Geometrie des Bauteils so gewählt, dass sie eine möglichst große Länge aufweisen. Ferner erfolgt das tropfenweise Aufbringen des flüssigen Materials 16 in dem äußeren Bereich 20 entlang einer oder mehrerer äußerer Bahnen 24, die parallel zu der Kontur 12 verlaufen. Dabei versteht sich, dass das Aufbringen des Materials in dem Kernbereich und in dem äußeren Bereich in beliebiger Reihenfolge erfolgen kann, das heißt, es kann entweder mit dem Kernbereich 18 oder mit dem äußeren Bereich 20 begonnen werden. Ferner muss das Aufbringen entlang der jeweiligen Bahnen nicht zwingend kontinuierlich erfolgen. Beispielsweise könnten Abschnitte einzelner Bahnen in einem ersten Durchlauf übersprungen werden und in einem oder mehreren späteren Durchläufen aufgefüllt werden. Der Kernbereich muss nicht vollständig mit Material gefüllt werden, d.h. es können Aussparungen und dergleichen in dem Kernbereich vorgesehen sein. In diesem Zusammenhang ist auch ersichtlich, dass die Kontur 12 nicht auf eine Außenkontur beschränkt ist, sondern auch eine Innenkontur des Bauteils sein kann. Ferner versteht sich, dass in einer Schicht auch zwei oder mehr Konturen vorhanden sein können, so dass dann auch zwei oder mehr zugehörige "äußere" Bereiche 20 vorhanden sein können. Der Begriff "äußerer Bereich" ist daher so breit zu verstehen, dass er allgemein einen an eine Kontur angrenzenden Bereich angibt.

Wie in Fig. 4 gezeigt, besteht bei dem vorliegenden Beispiel die Hülle (der äußere Bereich 20) aus einer bis fünf, beispielsweise zwei, Bahnen, die im Falle mehrerer Bahnen jeweils einen Abstand D_{LV,Hülle} zueinander aufweisen. In Vorschubrichtung (also entlang der Bahn) werden die Tropfen der Hülle in einem konstanten Abstand D_{VS,Hülle} abgelegt. Der Kern weist einen Abstand D_{HK} zur innersten Bahn der Hülle auf und wird mit den parallelen Kernbahnen 22 gefüllt. Innerhalb der Bahnen des Kerns werden die Tropfen mit einem konstanten Abstand D_{VS,Kern} abgelegt. Auch wenn bei dem vorliegenden Beispiel konstante Abstände in Vorschubrichtung verwendet werden, versteht sich, dass bei anderen Ausführungsformen variierende Abstände verwendet werden können, beispielsweise in Abhängigkeit von unterschiedlichen Anforderungen in unterschiedlichen Bereichen der Hülle und/oder des Kerns. Entsprechendes gilt auch für die Abstände zwischen den Bahnen beispielsweise des Kerns.

Wie aus Fig. 4 ersichtlich ist, werden die jeweiligen Bahnen der Hülle und des Kerns so berechnet, dass der Durchmesser der Tropfen entsprechend berücksichtigt wird, um zum einen die gewünschte Kontur 12 zu erhalten, und zum anderen insbesondere im Übergangsbereich zwischen Hülle und Kern eine konstante Schichthöhe zu erhalten. Dies führt dazu, dass wie in Fig. 4 gezeigt die äußerste Bahn der Hülle in dem Abstand D_{BH} von der Kontur 12 verläuft, und ebenso die innerste Bahn der Hülle in dem Abstand D_{HK} von den Bahnen des Kerns verläuft. Ferner ist ersichtlich, dass mit dem Ausdruck "Bahn" hierin eine Linie bezeichnet wird, entlang der der Druckkopf 102 bezüglich des Bauteils 10 bzw. der Schicht 14 desselben bewegt wird. Entsprechend werden die Tropfen entlang der Bahn abgelegt, wobei der Startpunkt und der Endpunkt einer Bahn jeweils dem Mittelpunkt des ersten bzw. des letzten abgelegten Tropfens entsprechen. In Abhängigkeit von der Position des Druckkopfs 102 entlang einer jeweiligen Bahn wird dieser auf geeignete Weise angesteuert, um die einzelnen Tropfen mit dem gewünschten Abstand abzulegen. Dabei versteht sich, dass dies in Abhängigkeit von der Bahngeschwindigkeit des Druckkopfs 102 entlang der jeweiligen Bahnen geschieht.

Die abgelegten Tropfen weisen einen (mittleren) Durchmesser d auf, der im Wesentlichen durch die Menge an pro Tropfen abgegebenem Material und die physikalischen Eigenschaften des Materials bestimmt ist. Dabei werden bei einigen Ausführungsformen für den Kernbereich 18 und für den äußeren Bereich 20 jeweils unterschiedliche mittlere Tropfendurchmesser verwendet, indem beispielsweise die Menge an pro Tropfen abgegebenem Material geeignet variiert wird. Insbesondere kann in dem äußeren Bereich 20 der mittlere Tropfendurchmesser d_{Hülle} kleiner oder gleich dem mittleren Tropfendurchmesser d_{Kern} in dem Kernbereich 18 sein. Es können Tropfendurchmesser einzelner Bahnen in dem Kernbereich und/oder in dem äußeren Bereich zueinander unterschiedliche Größen aufweisen.

Der durch das Hülle-Kern-Verfahren erzielte Vorteil wird noch einmal unter Bezugnahme auf Fig. 2 erläutert. Fig. 2 kann beispielsweise so betrachtet werden, dass sie einen Teil eines beispielhaften Kernbereichs innerhalb einer Schicht darstellt. Wie bereits erwähnt, ist ersichtlich, dass beispielsweise am Anfang 30 und am Ende 32 jeder Kernbahn 22 eine Abrundung entsteht, die in Abhängigkeit von der Richtung, in der die Kernbahn 22 durchlaufen wird, unterschiedlich ist. Dies ist eine Folge des tropfenweisen Aufbringens des flüssigen Materials, während sich der Druckkopf bewegt. Dies führt zu der im rechten Teil gezeigten unterschiedlichen Höhe der Schicht, insbesondere auch am Anfang 30 und am Ende 32 der jeweiligen Kernbahnen 22. Durch Vorsehen der erfindungsgemäßen Hülle entlang der Kontur 12 des Bauteils 10 können diese Unterschiede ausgeglichen werden. Wie im Folgenden noch einmal erläutert wird, spielen dabei beispielsweise der Abstand zwischen Hülle und Kern D_{HK}, der Abstand D_{BH} zwischen der äußersten Bahn der Hülle und der Kontur 12, etc. eine Rolle.

Bei einigen Ausführungsformen wird die innerste der äußeren Bahnen 24 so berechnet, dass sie einen zweiten Abstand D_{HK} zu dem Kernbereich 18 aufweist, der zumindest für einen Teil der innersten Bahn 24 kleiner ist als der erste Abstand D_{LV,Kern} zwischen den Kernbahnen 22. Auf diese Weise kann ein geeigneter Überlapp zwischen den äußersten Tropfen des Kerns und den Tropfen der innersten Bahn 24 der Hülle erzeugt bzw. vergrößert werden.

Weiter kann es vorteilhaft sein, einen dritten Abstand D_{BH} zwischen einer äußersten der äußeren Bahnen 24 und der Kontur 12 so festzulegen, dass er kleiner ist als der erste Abstand D_{LV,Kern} zwischen den Kernbahnen 22, beispielsweise etwa halb so groß, um auf diese Weise sicherzustellen, dass die Kontur 12 eingehalten wird.

Dabei versteht sich, dass die Tropfen des flüssigen Materials 16 den mittleren Durchmesser d aufweisen, und der zweite Abstand D_{HK} und/oder der dritte Abstand D_{BH} etwa das 0,4- bis 0,6-fache des mittleren Durchmessers d (für den Fall, dass unterschiedliche Durchmesser für Hülle und Kern verwendet werden, des mittleren Tropfendurchmessers d_{Hülle} in der Hülle) betragen kann. Auf diese Weise kann, wie bereits erläutert, eine möglichst ebene Schicht erhalten werden, und die Kontur 12 kann gut eingehalten werden. Wie bereits erwähnt, können bei einigen Ausführungsformen im Kern und in der Hülle Tropfen mit unterschiedlichen mittleren Durchmessern verwendet werden. Es können Tropfen mit einem Durchmesser (der abgelegten Tropfen) zwischen beispielsweise 200 und 1000 µm verwendet werden.

Weiter kann vorgesehen sein, dass ein vierter Abstand D_{VS,Hülle} zwischen benachbarten Tropfen entlang der Bahn auf einer der äußeren Bahnen 24 etwa das 0,6- bis 1,1-fache des mittleren Durchmessers d (der Hülle) beträgt, und/oder ein fünfter Abstand D_{VS,Kern} zwischen benachbarten Tropfen auf einer der Kernbahnen 22 etwa das 0,5- bis 1-fache des mittleren Durchmessers d (des Kerns) beträgt. Dabei ist insbesondere vorgesehen, dass der fünfte Abstand D_{VS,Kern} unterschiedlich zu dem vierten Abstand D_{VS,Hülle} ist, beispielsweise das 0,7- bis 0,95-fache desselben beträgt. Ebenso kann ein sechster Abstand D_{LV,Hülle} zwischen benachbarten der äußeren Bahnen 24 so festgelegt sein, dass er das 0,8- bis 1,2-fache des mittleren Durchmessers d der Tropfen (insbesondere der Hülle) beträgt. Darüber hinaus kann auch der erste Abstand D_{LV,Kern} das 0,8- bis 1,2-fache des mittleren Durchmessers d der Tropfen (des Kerns) betragen. Auf diese Weise kann eine möglichst dichte und ebene Schicht erhalten werden.

Es hat sich ebenfalls als vorteilhaft erwiesen, wenn beispielsweise mindestens zwei benachbarte äußere Bahnen 24 in entgegengesetzten Richtungen durchlaufen werden, und/oder mindestens zwei benachbarte Kernbahnen 22 in entgegengesetzten Richtungen durchlaufen werden. Auf diese Weise können systematische Abweichungen, die bei einem Durchlaufen einer Richtung auftreten können, ausgeglichen werden.

Wie unter Bezugnahme auf Fig. 2 erläutert, kann die Abrundung am Anfang 30 und am Ende 32 jeder Bahn unterschiedlich sein. Deshalb kann es von Vorteil sein, wenn der zweite Abstand D_{HK} zwischen dem Kernbereich 18 und der innersten der äußeren Bahnen 24 so variiert wird, dass er bei dem Anfang 30 der jeweiligen Kernbahnen 22 unterschiedlich zu dem bei dem Ende 32 ist. Wenn beispielsweise die Kernbahnen 22 in Fig. 4 alle in derselben Richtung durchlaufen werden, könnte beispielsweise der Abstand D_{HK} in dem in Fig. 4 gezeigten Ausschnitt so gewählt werden, dass er größer oder kleiner als der Abstand auf der gegenüberliegenden (nicht gezeigten) Seite der Schicht 14 ist.

Bei einigen Beispielen kann es auch von Vorteil sein, wenn die Kernbahnen 22 und/oder die äußeren Bahnen 24 in zwei aufeinanderfolgenden Schichten 14 in unterschiedlichen Richtungen durchlaufen werden. Auf diese Weise kann die Höhe des Bauteils 10 möglichst gleichmäßig erhalten werden. Zusätzlich oder alternativ können die Bahnen insbesondere der Hülle in aufeinanderfolgenden Schichten an unterschiedlichen, beispielsweise zufällig gewählten Punkten beginnen.

Bei geeigneter Wahl der oben erläuterten Abstände zwischen den einzelnen Tropfen und Bahnen in Abhängigkeit von der Geometrie des Bauteils können möglichst ebene Schichten erhalten werden, ohne dass Korrekturen zum Ausgleich einer ungleichmäßigen Schichthöhe im Anschluss an eine Fertigstellung einer Schicht erforderlich sind.

Wie bereits eingangs erwähnt, ist es mit dem LMP-Verfahren (Liquid Metal Printing) ebenfalls möglich, überhängende Konturen (auch als "Downskin" bezeichnet) herzustellen. Dies ist beispielhaft in Fig. 3 gezeigt. Wie in Fig. 3 ersichtlich, wird ein derartiger Überhang 11 des Bauteils 10 beispielsweise durch einen ersten Winkel α zur Aufbaurichtung innerhalb einer Schicht 14 beschrieben. Dabei versteht sich, das der erste Winkel α in Aufbaurichtung variieren kann, so dass er im Wesentlichen durch den Winkel zwischen der Tangente an die Kontur 12 in einer gegebenen Schicht 14 und der Aufbaurichtung angegeben werden kann.

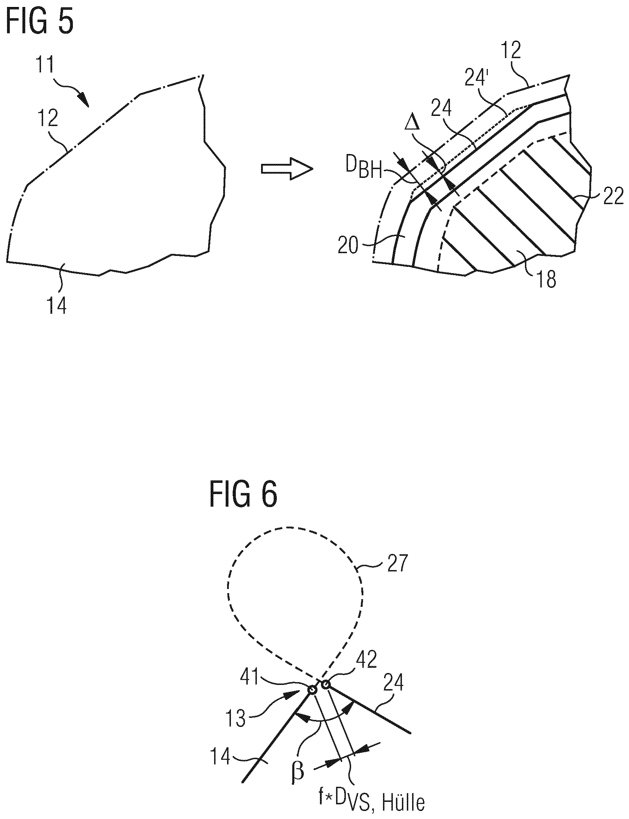

Wie in Fig. 3 ebenfalls gezeigt ist, kann sich der Überhang negativ auf die Ebenheit der Schicht auswirken, da sich das Bauteil zum Überhang hin abrundet und absacken kann. Erfindungsgemäß wurde jedoch festgestellt, dass dem entgegengewirkt werden kann, indem der dritte Abstand D_{BH} zwischen der äußersten der äußeren Bahnen 24 der Hülle und der Kontur 12 in der Schicht 14 im Bereich des Überhangs 11 um einen Kompensationsabstand Δ vergrößert wird, basierend auf dem ersten Winkel α. Dies ist in Fig. 5 beispielhaft gezeigt. In Fig. 5 ist gepunktet die Bahn 24' ohne Korrektur gezeigt, die verwendet würde, wenn kein Überhang vorhanden wäre, während die tatsächlich verwendete Bahn 24 so korrigiert wird, dass sie um den Kompensationsabstand Δ weiter innen, das heißt in Richtung hin zu dem Kernbereich 18 verläuft. Es ist ersichtlich, dass bei dem in Fig. 5 gezeigten Beispiel die Kontur 12 lediglich in dem durch die durchgezogene Linie angegebenen Bereich den Überhang 11 aufweist, während im restlichen Bereich der Kontur 12 keine Korrektur des Abstands der äußersten der äußeren Bahnen 24 erfolgt.

Eine weitere vorteilhafte Ausgestaltung des hierin beschriebenen Verfahrens wird im Folgenden unter Bezugnahme auf Fig. 6 beschrieben.

Wie in Fig. 6 gezeigt, kann die Kontur 12 in der Schicht 14 einen Bereich 13 aufweisen, in dem die Kontur eine lokale Krümmung aufweist, die größer als ein vorbestimmter Wert ist. Die lokale Krümmung wird dabei insbesondere durch die Krümmung der Bahn zwischen zwei aufeinanderfolgenden Tropfen 41, 42 in dem Bereich bezeichnet, die beispielsweise der Druckkopf 102 durchlaufen müsste, um die aufeinanderfolgenden Tropfen 41, 42 abzulegen. Insbesondere kann dabei der Bereich 13 einer Ecke des zu fertigenden Bauteils 10 entsprechen. An solch einer Ecke kann beispielsweise ein Winkel β zwischen angrenzenden Schenkeln einer Polygonform vorhanden sein. In solch einem Fall kann auch der Winkel β als Maß für die Krümmung verwendet werden.

Da in Bereichen mit einer hohen lokalen Krümmung aufgrund der limitierten Achsdynamik des Druckkopfs 102 bzw. der Verfahrvorrichtung 104 Bahnen nicht mit ausreichend hoher Bahngeschwindigkeit durchlaufen werden können, müssen unter Umständen niedrigere Bahngeschwindigkeiten verwendet werden, was zu geringeren Tropfenerzeugungsfrequenzen führt. Dies hat jedoch einen verringerten Energieeintrag und damit ein lokales Abkühlen des Bauteils zur Folge, was zu unerwünschten Abweichungen der erzeugten Geometrie insbesondere an Ecken und dergleichen führt. Es hat sich daher als vorteilhaft erwiesen, in solchen Bereichen die Tropfenerzeugung bei hoher Bahngeschwindigkeit zu stoppen, eine Schleife zu durchlaufen, ohne Tropfen aufzubringen, und den Eckpunkt erneut mit hoher Bahngeschwindigkeit in der gewünschten Richtung zu erreichen. Dann kann die Tropfenerzeugung wieder einsetzen. Auf diese Weise können alle Tropfen mit im Wesentlichen konstant hoher Geschwindigkeit aufgebracht werden.

Bei dem in Fig. 6 gezeigten Beispiel erfolgt das Aufbringen der einzelnen Tropfen beispielsweise von links nach rechts. Das heißt, bei Erreichen des Bereichs 13 wird ein letzter Tropfen 41 mit hoher Bahngeschwindigkeit aufgebracht, und dann wird eine Hilfsbahn 27 durchlaufen, wobei das Aufbringen des flüssigen Materials gestoppt wird. Insbesondere handelt es sich bei der Hilfsbahn 27 um eine geschlossene Hilfsbahn außerhalb der Kontur 12, die durchlaufen wird, ohne dass flüssiges Material 16 aufgebracht wird. Die Hilfsbahn 27 wird auf geeignete Weise so berechnet, dass mit der gewünschten Geschwindigkeit in möglichst kurzer Zeit der Teil der Kontur 12 erreicht werden kann, an dem der nächste Tropfen 42 aufgebracht werden soll. Dies erfolgt unter Verwendung von geeigneten Optimierungsalgorithmen (beispielsweise durch nichtlineare Optimierung mit einem bekannten Innere-Punkte-Verfahren), wobei beispielsweise eine maximale Relativgeschwindigkeit zwischen Druckkopf 102 und Verfahrvorrichtung 104, eine maximale Relativbeschleunigung oder eine maximale zeitliche Änderung der Relativbeschleunigung als Randbedingungen bei einer Optimierung im Hinblick auf die für das Durchlaufen der Hilfsbahn 27 benötigte Zeit verwendet werden. Insbesondere soll ein Rucken des Druckkopfs oder der Verfahrvorrichtung aufgrund großer Beschleunigungen bzw. Beschleunigungsänderungen vermieden werden. Im Zuge dessen kann ferner eine Position des letzten Tropfens 41 auf der äußeren Bahn 24 vor dem Stoppen des Aufbringens und darauf basierend eine Position des ersten Tropfens 42 auf der äußeren Bahn nach dem Fortsetzen des Aufbringens so bestimmt werden, dass ein direkter Abstand f*D_{VS,Hülle} zwischen beiden Tropfen ein vorbestimmter Abstand ist. Beispielsweise kann dieser Abstand das 0,8- bis 1,2-fache des Abstands D_{VS,Hülle} zwischen benachbarten Tropfen in Abschnitten der äußeren Bahn 24, in denen die Kontur 12 den Bereich 13 nicht aufweist, sein.

Mit den oben beschriebenen Verfahren ermöglicht die vorliegende Erfindung, eine möglichst gleichmäßige Schichtdicke innerhalb jeder Schicht 14, insbesondere auch dann, wenn ein Überhang ausgebildet wird, zu erzielen, ohne dass zusätzliche Messungen durchgeführt oder zusätzliche Vorrichtungen vorgesehen werden müssen. Dies wird dadurch erreicht, dass sämtliche der in einer Schicht zu durchlaufenden Bahnen im Voraus unter Berücksichtigung der Aufteilung in Hülle und Kern berechnet werden, gegebenenfalls in Abhängigkeit davon, ob Überhänge oder Ecken des Bauteils vorhanden sind.

In einem einfachsten Fall, in dem das Bauteil 10 keinen Überhang und keine Bereiche mit hoher lokaler Krümmung aufweist, und der Kernbereich vollständig mit Material gefüllt wird, kann beispielsweise der äußere Bereich so festgelegt werden, dass er den Kernbereich vollständig umgibt und eine gewünschte Breite aufweist. Dann kann in einem ersten Schritt der Kernbereich entlang paralleler Bahnen durchlaufen werden, bis dieser vollständig gefüllt ist. Im Anschluss daran wird dann der äußere Bereich durchlaufen, beispielsweise entlang einer bis fünf äußeren Bahnen, die vorgegebene Abstände untereinander bzw. zu der Kontur und zu dem Kernbereich aufweisen. Im Anschluss daran kann mit der Herstellung der darauffolgenden Schicht fortgefahren werden.

Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur schichtweisen Fertigung eines Bauteils (10) durch tropfenweise Aufbringen eines flüssigen Materials (16) mittels eines Druckkopfs (102), mit folgenden Schritten:
Festlegen einer Kontur (12) des zu fertigenden Bauteils (10) in einer Schicht (14) desselben;
Festlegen eines äußeren Bereichs (20) der Schicht (14), der entlang der Kontur (12) verläuft, und eines zentralen Kernbereichs (18) der Schicht (14), der von dem äußeren Bereich (20) umgeben ist;
tropfenweise Aufbringen des flüssigen Materials (16) mit einem ersten mittleren Tropfendurchmesser (d_{Kern}) in dem Kernbereich (18) entlang mehrerer paralleler, beispielsweise geradliniger Kernbahnen (22), die einen ersten Abstand (D_{LV,Kern}) zueinander aufweisen; und
tropfenweise Aufbringen des flüssigen Materials (16) mit einem zweiten mittleren Tropfendurchmesser (d_{Hülle}) in dem äußeren Bereich (20) entlang einer oder mehrerer äußerer Bahnen (24), die parallel zu der Kontur (12) verlaufen,
bei dem das Bauteil (10) einen Überhang (11) aufweist, der in der Schicht (14) unter einem ersten Winkel (α) zur Aufbaurichtung verläuft, ferner mit folgendem Schritt:
Vergrößern eines dritten Abstands (D_{BH}) zwischen einer äußersten der äußeren Bahnen (24) und der Kontur (12) in der Schicht (14) im Bereich des Überhangs (11) um einen Kompensationsabstand (Δ) basierend auf dem ersten Winkel (α).

2. Verfahren nach Anspruch 1, bei dem eine innerste der äußeren Bahnen (24) einen zweiten Abstand (D_{HK}) zu dem Kernbereich (18) aufweist, der zumindest für einen Teil der innersten Bahn (24) kleiner ist als der erste Abstand (D_{LV,Kern}).

3. Verfahren nach Anspruch 1 oder 2, bei dem der dritte Abstand (D_{BH}) zwischen der äußersten der äußeren Bahnen (24) und der Kontur (12) kleiner ist als der erste Abstand (D_{LV,Kern}).

4. Verfahren nach Anspruch 2 oder nach den Ansprüchen 2 und 3, bei dem der zweite Abstand (D_{HK}) und/oder der dritte Abstand (D_{BH}) etwa das 0,4- bis 0,6-fache des zweiten mittleren Tropfendurchmessers (d_{Hülle}) beträgt.

5. Verfahren nach Anspruch 4, bei dem ein vierter Abstand (D_{VS,Hülle}) zwischen benachbarten Tropfen auf einer der äußeren Bahnen (24) etwa das 0,6- bis 1,1-fache des zweiten mittleren Tropfendurchmessers (d_{Hülle}) beträgt, und/oder bei dem ein fünfter Abstand (D_{VS,Kern}) zwischen benachbarten Tropfen auf einer der Kernbahnen (22) etwa das 0,5- bis 1-fache des ersten mittleren Tropfendurchmessers (d_{Kern}) beträgt.

6. Verfahren nach Anspruch 5, bei dem der fünfte Abstand (D_{VS,Kern}) unterschiedlich zu dem vierten Abstand (D_{VS,Hülle}) ist, beispielsweise das 0,7- bis 0,95-fache desselben beträgt.

7. Verfahren nach einem der Ansprüche 4 bis 6, bei dem ein sechster Abstand (D_{LV,Hülle}) zwischen mindestens zwei benachbarten der äußeren Bahnen (24) das 0,8- bis 1,2-fache des zweiten mittleren Tropfendurchmessers (d_{Hülle}) beträgt und/oder der erste Abstand (D_{LV,Kern}) das 0,8- bis 1,2-fache des ersten mittleren Tropfendurchmessers (d_{Kern}) beträgt.

8. Verfahren nach einem der Ansprüche 1 bis 7, bei dem der zweite mittlere Tropfendurchmesser (d_{Hülle}) kleiner oder gleich dem ersten mittleren Tropfendurchmesser (d_{Kern}) ist.

9. Verfahren nach einem der Ansprüche 1 bis 8, bei dem mindestens zwei benachbarte äußere Bahnen (24) in entgegengesetzten Richtungen durchlaufen werden, und/oder bei dem mindestens zwei benachbarte Kernbahnen (22) in entgegengesetzten Richtungen durchlaufen werden.

10. Verfahren nach Anspruch 2 oder Anspruch 2 mit einem der Ansprüche 3 bis 9, bei dem jede der Kernbahnen (22) einen Anfang (30), an dem mit dem Aufbringen des flüssigen Materials (16) begonnen wird, und ein Ende (32), an dem das Aufbringen des flüssigen Materials (16) beendet wird, aufweist, wobei der zweite Abstand (D_{HK}) bei dem Anfang (30) unterschiedlich zu dem bei dem Ende (32) ist.

11. Verfahren nach einem der vorhergehenden Ansprüche, bei dem die Kernbahnen (22) und/oder die äußeren Bahnen (24) in zwei aufeinanderfolgenden Schichten (14) in unterschiedlichen Richtungen durchlaufen werden.

12. Verfahren nach einem der Ansprüche 1 bis 11, bei dem die Kontur (12) in der Schicht (14) einen Bereich (13) aufweist, in dem die Kontur eine lokale Krümmung aufweist, die größer als ein vorbestimmter Wert ist, mit:
Stoppen des Aufbringens des flüssigen Materials (16) beim Durchlaufen einer der äußeren Bahnen (24) bei Erreichen des Bereichs (13);
Durchlaufen einer an die jeweilige äußere Bahn (24) anschließenden geschlossenen Hilfsbahn (27) außerhalb der Kontur (12) ohne Aufbringen des flüssigen Materials (16); und
Fortsetzen des Aufbringens des flüssigen Materials (16) nach Durchlaufen der Hilfsbahn (27) und bei erneutem Erreichen des Bereichs (13).

13. Verfahren nach Anspruch 12, ferner mit:
Festlegen der Hilfsbahn (27) in Abhängigkeit von mindestens einer maximalen Relativgeschwindigkeit, einer maximalen Relativbeschleunigung oder einer maximalen zeitlichen Änderung der Relativbeschleunigung des Druckkopfs (102) bezüglich des Bauteils (10); und/oder
Bestimmen einer Position des letzten Tropfens (41) auf der äußeren Bahn (24) vor dem Stoppen des Aufbringens und darauf basierend Bestimmen einer Position des ersten Tropfens (42) auf der äußeren Bahn nach dem Fortsetzen des Aufbringens, so dass ein direkter Abstand (f*D_{VS,Hülle}) zwischen beiden Tropfen ein vorbestimmter Abstand ist, beispielsweise das 0,8-bis 1,2-fache des Abstands (D_{VS,Hülle}) zwischen benachbarten Tropfen in Abschnitten der äußeren Bahn (24), in denen die Kontur (12) den Bereich (13) nicht aufweist.

14. Vorrichtung (100) zur additiven Fertigung eines Bauteils (10), mit:
einem Druckkopf (102), der zum Aufbringen eines flüssigen Materials (16) ausgebildet ist;
einer Verfahrvorrichtung (104), die zum Verfahren des Druckkopfs (102) und des zu fertigenden Bauteils (10) relativ zueinander ausgebildet ist; und
einer Steuervorrichtung (106), die ausgebildet ist zum Steuern des Druckkopfs (102) und der Verfahrvorrichtung (104) zum Durchführen des Verfahrens nach einem der Ansprüche 1 bis 13.

## Claims

1. Method of manufacturing a component (10) in layers by dropwise application of a liquid material (16) using a printhead (102), comprising the following steps:
defining a contour (12) of the component (10) to be manufactured in a layer (14) thereof;
defining an outer region (20) of the layer (14) that extends along the contour (12) and a central core region (18) of the layer (14) that is surrounded by the outer region (20);
dropwise applying the liquid material (16) with a first average drop diameter (d_{core}) in the core region (18) along multiple parallel, e.g. rectilinear, core paths (22) that have a first spacing (D_{LV, core}) from each other; and
dropwise applying the liquid material (16) with a second average drop diameter (dₕᵤₗₗ) in the outer region (20) along one or more outer paths (24) that extend parallel to the contour (12),
wherein the component (10) includes an overhang (11) that extends in the layer (14) at a first angle (α) to the build-up direction, further comprising:
increasing the third spacing (D_{BH}) between an outermost one of the outer paths (24) and the contour (12) in the layer (14) in the region of the overhang (11) by a compensation spacing (Δ) based on the first angle (α).

2. Method according to claim 1, wherein an innermost one of the outer paths (24) has a second spacing (D_{HK}) from the core region (18) that is less than the first spacing (D_{LV, core}) at least for a portion of the innermost path (24).

3. Method according to claim 1 or 2, wherein the third spacing (D_{BH}) between the outermost one of the outer paths (24) and the contour (12) is less than the first spacing (D_{LV, core}).

4. Method according to claim 2 or to claims 2 and 3, wherein the second spacing (D_{HK}) and/or the third spacing (D_{BH}) is about 0.4 to 0.6 times the second average droplet diameter (dₕᵤₗₗ).

5. Method according to claim 4, wherein a fourth spacing (D_{VS, hull}) between adjacent droplets on one of the outer paths (24) is about 0.6 to 1.1 times the second average droplet diameter (dₕᵤₗₗ), and/or wherein a fifth spacing (D_{VS, core}) between adjacent droplets on one of the core paths (22) is about 0.5 to 1 times the first average droplet diameter (d_{core}).

6. Method according to claim 5, wherein the fifth spacing (D_{VS, core}) is different from the fourth spacing (D_{VS, hull}), for example, it is 0.7 to 0.95 times the same.

7. Method according to one of claims 4 to 6, wherein a sixth spacing (D_{LV, hull}) between at least two adjacent ones of the outer paths (24) is 0.8 to 1.2 times the second average droplet diameter (dₕᵤₗₗ) and/or the first spacing (D_{LV, core}) is 0.8 to 1.2 times the first average droplet diameter (d_{core}).

8. Method according to one of claims 1 to 7, wherein the second average droplet diameter (dₕᵤₗₗ) is smaller than or equal to the first average droplet diameter (d_{core}).

9. Method according to one of claims 1 to 8, wherein at least two adjacent outer paths (24) are traversed in opposite directions, and/or wherein at least two adjacent core paths (22) are traversed in opposite directions.

10. Method according to claim 2, or claim 2 in combination with one of claims 3 to 9, wherein each of the core paths (22) has a beginning (30), at which the application of the liquid material (16) is begun, and an end (32), at which the application of the liquid material (16) is ended, wherein the second spacing (D_{HK}) at the beginning (30) is different than that at the end (32).

11. Method according to one of the preceding claims, wherein the core paths (22) and/or the outer paths (24) are traversed in two successive layers (14) in different directions.

12. Method according to one of claims 1 to 11, wherein the contour (12) in the layer (14) includes a region (13) in which the contour has a local curvature that is greater than a predetermined value, comprising:
stopping the application of the liquid material (16) when traversing one of the outer paths (24) upon reaching the region (13);
traversing a closed auxiliary path (27) that adjoins the particular outer path (24) outside the contour (12) without applying the liquid material (16); and
continuing the application of the liquid material (16) after traversing the auxiliary path (27) and when it reaches the region (13) again.

13. Method according to claim 12, further comprising:
determining the auxiliary path (27) as a function of at least one of a maximum relative velocity, a maximum relative acceleration, or a maximum temporal change in relative acceleration of the printhead (102) with respect to the component (10); and/or
determining a position of the last drop (41) on the outer path (24) before the stopping of the application and, based thereon, determining a position of the first drop (42) on the outer path after continuation of the application so that a direct spacing (f*D_{VS, hull}) between the two drops is a predetermined spacing, for example 0.8 to 1.2 times the spacing (D_{VS, hull}) between adjacent drops in sections of the outer path (24) in which the contour (12) does not have the region (13).

14. Apparatus (100) for additive manufacturing of a component (10), comprising:
a printhead (102) that is configured to apply a liquid material (16);
a moving apparatus (104) that is configured to move the printhead (102) and the component (10) to be manufactured relative to each other; and
a control device (106) that is configured to control the printhead (102) and the moving apparatus (104) to perform the method according to one of claims 1 to 13.

## Revendications

1. Procédé de fabrication par couches d'une pièce (10) par dépôt goutte à goutte d'un matériau liquide (16) au moyen d'une tête d'impression (102), comprenant les étapes suivantes :
définition d'un contour (12) de la pièce (10) à fabriquer dans une couche (14) de celle-ci ;
définition d'une zone externe (20) de la couche (14), laquelle s'étend le long du contour (12), et d'une zone centrale de noyau (18) de la couche (14), laquelle est entourée par la zone externe (20) ;
dépôt goutte à goutte du matériau liquide (16) avec un premier diamètre de goutte moyen (allemand : *Durchmesser Kern*, d_{Kern}) dans la zone de noyau (18) le long de plusieurs trajectoires de noyau (22) parallèles, par exemple rectilignes, lesquelles présentent un premier espacement (D_{LV,Kern}) entre elles ; et
dépôt goutte à goutte du matériau liquide (16) avec un deuxième diamètre de goutte moyen (allemand : *Durchmesser Hülle*, d_{Hülle}) dans la zone externe (20) le long d'une ou de plusieurs trajectoires externes (24) qui s'étendent parallèlement au contour (12),
dans lequel la pièce (10) présente un surplomb (11) qui s'étend dans la couche (14) sous un premier angle (α) par rapport à la direction de construction, comprenant en outre l'étape suivante :
augmentation d'un troisième espacement (D_{BH}) entre une trajectoire la plus externe des trajectoires externes (24) et le contour (12) dans la couche (14) dans la zone du surplomb (11) d'une distance de compensation (Δ) sur la base du premier angle (α).

2. Procédé selon la revendication 1, dans lequel une trajectoire la plus interne des trajectoires externes (24) présente un deuxième espacement (D_{HK}) par rapport à la zone de noyau (18) qui, au moins pour une partie de la trajectoire la plus interne (24), est inférieur au premier espacement (D_{LV,Kern}).

3. Procédé selon la revendication 1 ou 2, dans lequel le troisième espacement (D_{BH}) entre la trajectoire la plus externe des trajectoires externes (24) et le contour (12) est inférieur au premier espacement (D_{LV,Kern}).

4. Procédé selon la revendication 2 ou selon les revendications 2 et 3, dans lequel le deuxième espacement (D_{HK}) et/ou le troisième espacement (D_{BH}) est d'environ 0,4 à 0,6 fois le deuxième diamètre de goutte moyen (d_{Hülle}).

5. Procédé selon la revendication 4, dans lequel un quatrième espacement (D_{VS,Hülle}) entre des gouttes adjacentes sur l'une des trajectoires externes (24) est d'environ 0,6 à 1,1 fois le deuxième diamètre de goutte moyen (d_{Hülle}), et/ou dans lequel un cinquième espacement (D_{VS,Kern}) entre des gouttes adjacentes sur l'une des trajectoires de noyau (22) est d'environ 0,5 à 1 fois le premier diamètre de goutte moyen (d_{Kern}).

6. Procédé selon la revendication 5, dans lequel le cinquième espacement (D_{VS,Kern}) est différent du quatrième espacement (D_{VS,Hülle}), par exemple est de 0,7 à 0,95 fois celui-ci.

7. Procédé selon l'une des revendications 4 à 6, dans lequel un sixième espacement (D_{LV,Hülle}) entre au moins deux des trajectoires externes (24) adjacentes est de 0,8 à 1,2 fois le deuxième diamètre de goutte moyen (d_{Hülle}) et/ou le premier espacement (D_{LV,Kern}) est de 0,8 à 1,2 fois le premier diamètre de goutte moyen (d_{Kern}).

8. Procédé selon l'une des revendications 1 à 7, dans lequel le deuxième diamètre de goutte moyen (d_{Hülle}) est inférieur ou égal au premier diamètre de goutte moyen (d_{Kern}).

9. Procédé selon l'une des revendications 1 à 8, dans lequel au moins deux trajectoires externes (24) adjacentes sont parcourues dans des directions opposées, et/ou dans lequel au moins deux trajectoires de noyau (22) adjacentes sont parcourues dans des directions opposées.

10. Procédé selon la revendication 2 ou la revendication 2 avec l'une des revendications 3 à 9, dans lequel chacune des trajectoires de noyau (22) présente un début (30), au niveau duquel le dépôt du matériau liquide (16) commence, et une fin (32), au niveau de laquelle le dépôt du matériau liquide (16) se termine, le deuxième espacement (D_{HK}) au niveau du début (30) étant différent de celui au niveau de la fin (32).

11. Procédé selon l'une des revendications précédentes, dans lequel les trajectoires de noyau (22) et/ou les trajectoires externes (24) sont parcourues dans des directions différentes dans deux couches (14) successives.

12. Procédé selon l'une des revendications 1 à 11, dans lequel le contour (12) dans la couche (14) présente une zone (13) dans laquelle le contour présente une courbure locale qui est supérieure à une valeur prédéterminée, comprenant :
l'arrêt du dépôt du matériau liquide (16) lors du parcours de l'une des trajectoires externes (24) lorsque la zone (13) est atteinte ;
le parcours d'une trajectoire auxiliaire (27) fermée faisant suite à la trajectoire externe (24) respective à l'extérieur du contour (12) sans dépôt du matériau liquide (16) ; et
la reprise du dépôt du matériau liquide (16) après le parcours de la trajectoire auxiliaire (27) et lorsque la zone (13) est de nouveau atteinte.

13. Procédé selon la revendication 12, comprenant en outre :
la définition de la trajectoire auxiliaire (27) en fonction d'au moins une vitesse relative maximale, une accélération relative maximale ou une variation temporelle maximale de l'accélération relative de la tête d'impression (102) par rapport à la pièce (10) ; et/ou
la détermination d'une position de la dernière goutte (41) sur la trajectoire externe (24) avant l'arrêt du dépôt et, sur cette base, la détermination d'une position de la première goutte (42) sur la trajectoire externe après la reprise du dépôt, de sorte qu'une distance directe (f*D_{VS,Hülle}) entre les deux gouttes soit une distance prédéterminée, par exemple de 0,8 à 1,2 fois l'espacement (D_{VS,Hülle}) entre des gouttes adjacentes dans des sections de la trajectoire externe (24) dans lesquelles le contour (12) ne présente pas la zone (13).

14. Dispositif (100) pour la fabrication additive d'une pièce (10), comprenant :
une tête d'impression (102), laquelle est configurée pour le dépôt d'un matériau liquide (16) ;
un dispositif de déplacement (104), lequel est configuré pour déplacer la tête d'impression (102) et la pièce (10) à fabriquer l'une par rapport à l'autre ; et
un dispositif de commande (106), lequel est configuré pour commander la tête d'impression (102) et le dispositif de déplacement (104) afin de mettre en œuvre le procédé selon l'une des revendications 1 à 13.
